# EUROPEAN PATENT APPLICATION

(11) **EP 4 358 352 A1**
(43) Date of publication of application: **24.04.2024**
(21) Application number: 22857706.0
(22) Date of filing: 12.08.2022
(51) Int. Cl.: H02J 7/00

(54) **WEARABLE DEVICE, CHARGING DEVICE AND ELECTRONIC DEVICE**

(30) Priority: 18.08.2021 CN 202110949579
(71) Applicant: Huawei Technologies Co., Ltd., Shenzhen, Guangdong 518129 (CN)
(72) Inventor: REN, Erbei, Shenzhen, Guangdong 518129 (CN); BU, Jian, Shenzhen, Guangdong 518129 (CN); YUAN, Qiyun, Shenzhen, Guangdong 518129 (CN); WANG, Shixian, Shenzhen, Guangdong 518129 (CN)
(74) Representative: Goddar, Heinz J.
(86) International application number: PCT/CN2022/112168
(87) International publication number: WO 2023/020394

(57) **Abstract**

This application provides a wearable device, a charging device, and an electronic device, and relates to the field of electronic device technologies, to resolve a problem of poor charging experience of a wearable device. The wearable device provided in this application includes at least one powered part, and the powered part has a first conductive terminal and a second conductive terminal. The first conductive terminal has a first docking end, and the first docking end protrudes from a first housing and is configured to electrically connect to a corresponding conductive terminal in the charging device. The second conductive terminal has a second docking end, and the second docking end protrudes from the first housing and is configured to electrically connect to a corresponding conductive terminal in the charging device. A first magnet is disposed in an accommodating cavity, and is located between the first conductive terminal and the second conductive terminal, and is configured to attract a magnet in the charging device. The two conductive terminals facilitate implementation of a light and thin design of the wearable device. In addition, disposing the first magnet between the two conductive terminals is also conducive to proper use of internal space of the wearable device.

## Description

### CROSS-REFERENCE TO RELATED APPLICATIONS

This application claims priority to Chinese Patent Application No. 202110949579.6, filed with the China National Intellectual Property Administration on August 18, 2021 and entitled "WEARABLE DEVICE, CHARGING DEVICE, AND ELECTRONIC DEVICE", which is incorporated herein by reference in its entirety.

### TECHNICAL FIELD

This application relates to the field of electronic device technologies, and in particular, to a wearable device, a charging device, and an electronic device.

### BACKGROUND

With the widespread use of wearable devices, a user has higher requirements on use experience of the wearable devices. Smart glasses are used as an example. In terms of a main structure, the smart glasses usually include a glasses frame and lenses secured to the glasses frame. In practice, the lens may be a concave lens, a convex lens, a polarizer, or the like. In addition, to enrich functions of the smart glasses, the smart glasses may further include a battery and electronic components such as a processor, a speaker, and a microphone, so that the user can perform functions such as making a voice call or listening to music by using the smart glasses.

In practice, the smart glasses need to be charged by using a charging device, and electric energy is stored in the battery for use by the electronic components such as the processor, the speaker, and the microphone. However, current smart glasses are usually equipped with a micro-USB interface, and the charging device is equipped with a micro-USB plug. After the plug is plugged into the interface, the charging device may charge the smart glasses. However, the micro-USB interface occupies relatively large space, and therefore is not conducive to a light and thin design of the smart glasses. In addition, the charging device can charge the smart glasses only after the micro-USB plug is plugged into the micro-USB interface. This brings inconvenience to operation, and compromises user experience.

### SUMMARY

This application provides a wearable device, a charging device, and an electronic device that are conducive to implementing a light and thin design and can effectively improve user experience.

According to one aspect, this application provides a wearable device, including a first housing, a battery, and a first circuit board assembly. The first housing has an accommodating cavity, and the battery and the first circuit board assembly are electrically connected and are disposed in the accommodating cavity. The first housing has at least one powered part, and the powered part has a first conductive terminal and a second conductive terminal. The first conductive terminal has a first connection end and a first docking end. The first connection end is electrically connected to the first circuit board assembly, and the first docking end protrudes from the first housing and is configured to electrically connect to a corresponding conductive terminal in the charging device. The second conductive terminal has a second connection end and a second docking end. The second connection end is electrically connected to the first circuit board assembly, and the second docking end protrudes from the first housing and is configured to electrically connect to a corresponding conductive terminal in the charging device. A first magnet is disposed in the accommodating cavity, and is located between the first conductive terminal and the second conductive terminal, and is configured to attract a magnet in the charging device.

In the wearable device provided in this application, the powered part may be electrically connected to the charging device by using two conductive terminals (namely, the first conductive terminal and the second conductive terminal), and transmit electric energy to the battery, so that a quantity of used conductive terminals and space occupation can be reduced. In addition, the powered part docks with the charging device through magnetic attraction, thereby facilitating an operation of a user during charging. Alternatively, it may be understood that precise docking between conductive terminals can be implemented through attraction between a magnet in smart glasses and a magnet in the charging device. In addition, plugging and unplugging actions are also avoided. Therefore, it is more convenient for user operation during charging or after charging is completed, thereby helping improve use experience of the user. In addition, after the first magnet is disposed between the first conductive terminal and the second conductive terminal, space between the first conductive terminal and the second conductive terminal can be fully used, thereby avoiding a waste of space. Therefore, this is conducive to a light and thin design of the wearable device. Alternatively, it may be understood that, in specific application, to avoid an adverse impact like electromagnetic interference between the first conductive terminal and the second conductive terminal, specific spacing is kept between the first conductive terminal and the second conductive terminal. After the first magnet is disposed between the first conductive terminal and the second conductive terminal, space between the first conductive terminal and the second conductive terminal can be effectively used, thereby avoiding a waste of space.

In specific application, the first conductive terminal and the second conductive terminal may be disposed in parallel, and the first docking end and the second docking end face toward a same direction, to facilitate docking with a conductive structure in the charging device.

The first magnet may be a rectangular block. The first magnet has a first side, a second side, a third side, and a fourth side that are sequentially connected. The first side faces toward the first conductive terminal, and the third side faces toward the second conductive terminal. A distance between the first side and the first conductive terminal is the same as a distance between the third side and the second conductive terminal. Alternatively, it may be understood that the first magnet may be located at a middle position between the first conductive terminal and the second conductive terminal.

In addition, an axis of the first conductive terminal and an axis of the second conductive terminal may be located in a plane M. A distance between the second side and the plane M may be different from a distance between the fourth side and the plane M. The first conductive terminal and the second conductive terminal are disposed in parallel. Therefore, the axis of the first conductive terminal and the axis of the second conductive terminal are located in a same plane, and the plane is a plane on which the first conductive terminal and the second conductive terminal are located. The second side is parallel to the plane. Therefore, a distance between the second side and the plane is a distance between the second side and the plane on which the first conductive terminal and the second conductive terminal are located. Correspondingly, the fourth side is parallel to the plane. Therefore, a distance between the fourth side and the plane is a distance between the fourth side and the plane on which the first conductive terminal and the second conductive terminal are located.

In some implementations, the first magnet may include a plurality of magnet units, and the plurality of magnet units may be arranged in a form of a Halbach array, to provide large magnetic attraction force in limited volume space.

Alternatively, a soft magnet may be disposed on a side that is of the first magnet and that faces toward the accommodating cavity, to enhance magnetic attraction force of the first magnet, thereby ensuring connection reliability when the powered part docks with the charging device.

In specific application, the first circuit board assembly may include a flexible circuit board, and a first conductive sheet and a second conductive sheet may be disposed in the flexible circuit board. The first conductive sheet may be connected to the first connection end, to implement an electrical connection between the first conductive sheet and the first conductive terminal. The second conductive sheet may be connected to the second connection end, to implement an electrical connection between the second conductive sheet and the second conductive terminal.

In addition, to improve stability of the first conductive terminal and the second conductive terminal, a first reinforcing plate may be disposed on a side that is of the first conductive sheet and that is away from the first connection end, and a second reinforcing plate may be disposed on a side that is of the second conductive sheet and that is away from the second connection end. Because the first reinforcing plate and the second reinforcing plate can provide effective supporting force, deformation of the first conductive sheet and the second conductive sheet can be prevented. Therefore, stability of the first conductive terminal and the second conductive terminal can be effectively improved.

Certainly, in some implementations, the first reinforcing plate and the second reinforcing plate may also be secured to the soft magnet, to effectively prevent an adverse situation like displacement of the first conductive terminal and the second conductive terminal.

It may be understood that in practice, static electricity may exist in the wearable device. To prevent static electricity from causing an adverse impact on an electronic component in the wearable device, an electrostatic protection component may be further disposed in the wearable device. In specific disposition, the electrostatic protection component may be electrically connected to the flexible circuit board, and disposed on a side that is of the battery and that is away from the powered part. Alternatively, it may be understood that the battery may be located between the powered part and the electrostatic protection component, to prevent the electrostatic protection component from occupying space of the powered part.

In specific application, the wearable device may be smart glasses. For example, the smart glasses may include a rim, a first temple, and a second temple. One end of the first temple may be connected to the rim, and the other end may be provided with the powered part. One end of the second temple may be connected to the rim, and the other end may be provided with the powered part.

Certainly, the powered part may also be applied to another type of wearable devices such as a smart watch or a smart band. In addition, one powered part may be disposed in the wearable device, or two or more powered parts may be disposed. This is not limited in this application.

According to another aspect, this application further provides a charging device, configured to charge a wearable device. The charging device may include a power interface configured to connect to a power supply and a charging head configured to connect to the wearable device. Electric energy in the power supply may charge the wearable device through the charging head in the charging device.

In specific application, the charging head may include a second housing, a third conductive terminal, a fourth conductive terminal, and a second magnet. The third conductive terminal, the fourth conductive terminal, and the second magnet are all disposed in the second housing. The third conductive terminal has a third connection end and a third docking end, the third connection end is electrically connected to a second circuit board assembly, and the third docking end protrudes from the second housing and is configured to connect to a conductive terminal of a powered part. The fourth conductive terminal has a fourth connection end and a fourth docking end. The fourth connection end is electrically connected to the second circuit board assembly, and the fourth docking end protrudes from the second housing and is configured to connect to the conductive terminal of the powered part. The second magnet is located between the third conductive terminal and the fourth conductive terminal, and is configured to attract a magnet of the powered part.

In specific application, the third conductive terminal and the fourth conductive terminal may be parallel, and the third docking end and the fourth docking end may face toward a same direction, to facilitate docking with the powered part.

The second magnet may be a rectangular block. The second magnet has a first side, a second side, a third side, and a fourth side that are sequentially connected. The first side faces toward the third conductive terminal, and the third side faces toward the fourth conductive terminal. A distance between the first side and the third conductive terminal is the same as a distance between the third side and the fourth conductive terminal. Alternatively, it may be understood that the second magnet may be located at a middle position between the third conductive terminal and the fourth conductive terminal.

In addition, an axis of the third conductive terminal 42 and an axis of the fourth conductive terminal 43 may be located in a plane M'. A distance between the second side and the plane M' may be the same as a distance between the fourth side 444 and the plane M'. The third conductive terminal and the fourth conductive terminal are disposed in parallel. Therefore, the axis of the third conductive terminal and the axis of the fourth conductive terminal are located in a same plane, and the plane is the plane on which the third conductive terminal and the fourth conductive terminal are located. The second side is parallel to the plane. Therefore, a distance between the second side and the plane is a distance between the second side and the plane on which the third conductive terminal and the fourth conductive terminal are located. Correspondingly, the fourth side is parallel to the plane. Therefore, a distance between the fourth side and the plane is a distance between the fourth side and the plane on which the third conductive terminal and the fourth conductive terminal are located.

In some implementations, the charging device may include a female socket, and each charging head may be electrically connected to the female socket by using an independent cable. In addition, in all cables, lengths of the cables may be the same or may be different.

In each charging head, a flange may be disposed on an outer surface of the second housing, and both the third docking end and the fourth docking end may be located in a contour enclosed by the flange. After the charging head docks with the powered part, the flange can be sleeved on a periphery of a first housing of the powered part, thereby effectively preventing impurities such as dust and water vapor from entering.

In specific application, a height of the flange may be properly set based on an actual situation. For example, the height of the flange is higher than a length of the third conductive terminal and the fourth conductive terminal protruding from the second housing. In practice, the flange can play a good role in blocking a foreign matter, to prevent the third conductive terminal and the fourth conductive terminal from being scratched by the foreign matter. In addition, when the foreign matter is a material with relatively good conductivity such as metal, an adverse situation like a short circuit between the third conductive terminal and the fourth conductive terminal can be further prevented.

According to another aspect, this application further provides an electronic device, including the foregoing wearable device and charging device. In specific application, after a charging head docks with a powered part, a first magnet and a second magnet attract each other, a first docking end is connected to a third docking end, and a second docking end is connected to a fourth docking end. Alternatively, the first docking end is connected to the fourth docking end, and the second docking end is connected to the third docking end. Alternatively, it may be understood that connection effect of forward and reverse insertion may be implemented between the charging head and the powered part, thereby improving operation convenience during charging.

In addition, when there are a plurality of powered parts, each charging head may be connected to any one of the powered parts, thereby effectively improving charging convenience.

Certainly, in some implementations, the first magnet may be disposed in an eccentric manner. That is, a center of the first magnet is not located in a plane on which a first conductive terminal and a second conductive terminal are located. Therefore, when the charging head and the powered part are connected in a forward and reverse insertion manner, to improve attraction effect between the first magnet and the second magnet, in a direction perpendicular to a docking direction of the powered part and the charging head, a cross-sectional area of the second magnet may be greater than a cross-sectional area of the first magnet.

It may be understood that, in specific application, types of the charging device and the wearable device in the electronic device are not limited in this application.

### BRIEF DESCRIPTION OF DRAWINGS

FIG. 1 is a schematic perspective view of a structure of smart glasses according to an embodiment of this application;
FIG. 2 is a schematic perspective view of a structure of smart glasses having a partial section according to an embodiment of this application;
FIG. 3 is a partial enlarged view of FIG. 2;
FIG. 4 is a partial enlarged view of FIG. 3;
FIG. 5 is a schematic cross-sectional view of a structure in an A-A direction in FIG. 3;
FIG. 6 is a schematic diagram of a structure of a first magnet according to an embodiment of this application;
FIG. 7 is a schematic diagram of a connection structure of a charging device according to an embodiment of this application;
FIG. 8 is a schematic diagram of a structure of an electronic device according to an embodiment of this application;
FIG. 9 is a schematic cross-sectional view of a structure in a B-B direction in FIG. 8;
FIG. 10 is a schematic diagram of a structure of a charging head according to an embodiment of this application;
FIG. 11 is a schematic cross-sectional view of a structure in a C-C direction in FIG. 10;
FIG. 12 is a schematic cross-sectional view of another structure of a charging head according to an embodiment of this application;
FIG. 13 is a circuit diagram according to an embodiment of this application;
FIG. 14 is a schematic diagram of an application scenario of a powered part and a charging head according to an embodiment of this application;
FIG. 15 is a schematic diagram of another application scenario of a powered part and a charging head according to an embodiment of this application;
FIG. 16 is a schematic diagram of another application scenario of a powered part and a charging head according to an embodiment of this application;
FIG. 17 is a schematic diagram of another application scenario of a powered part and a charging head according to an embodiment of this application;
FIG. 18 is a schematic diagram of another application scenario of a powered part and a charging head according to an embodiment of this application; and
FIG. 19 is a schematic diagram of another application scenario of a powered part and a charging head according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of a wearable device provided in embodiments of this application, the following first describes an application scenario of the wearable device.

A wearable device is a general term for portable electronic devices that can be directly worn on a body (like a wrist, a face, or a neck) or that can be integrated into clothes or accessories of a user. The wearable device has a specific information processing function. For example, the wearable device can display an image or play a sound to the user, receive a sound of the user, respond to a touch or a slide operation of the user, or the like. Alternatively, some wearable devices may communicate with a mobile phone, a computer, or a base station device. In practice, the wearable devices have various types, forms, and functions that can be implemented.

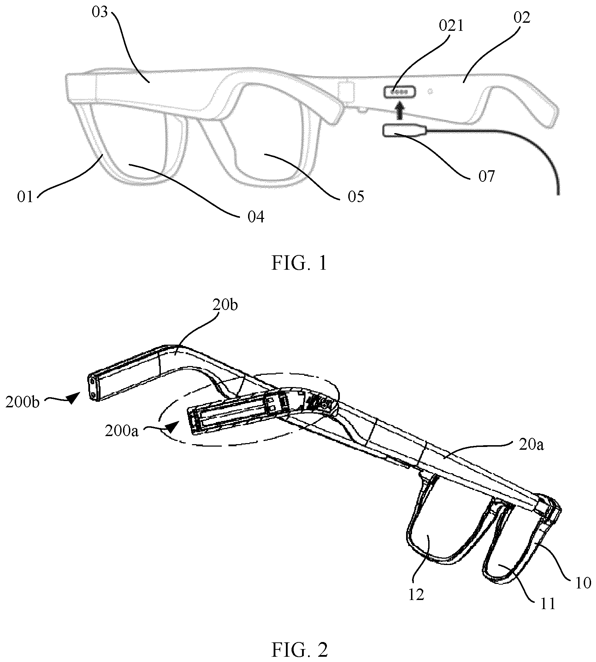

For example, as shown in FIG. 1, in an embodiment provided in this application, smart glasses are provided, including a rim 01, a temple 02, and a temple 03. A lens 04 and a lens 05 are secured in the rim 01. One end of the temple 02 is connected to the rim 01, and one end of the temple 03 is connected to the rim 01. In practice, the lens 04 and the lens 05 may be a planar lens, a concave lens, a convex lens, a polarizer, or the like. A battery and electronic components such as a processor, a speaker, and a microphone may be installed inside the temple 02 and the temple 03, so that a user can perform a function like a voice call or music listening by using the smart glasses.

In practice, the smart glasses need to be charged by using a charging device (not marked in the figure), and electric energy is stored in a battery in the temple 02 for use by the electronic components such as the processor, the speaker, and the microphone. However, current smart glasses are usually equipped with a micro-USB interface 021, and the charging device is equipped with a micro-USB plug 07. After the micro-USB plug 07 is plugged into the micro-USB interface 021, the charging device may charge the smart glasses. However, the micro-USB interface 021 occupies relatively large space, and therefore is not conducive to a light and thin design of the smart glasses. In addition, the charging device can charge the smart glasses only after the micro-USB plug 07 is plugged into the micro-USB interface 021. This brings inconvenience to operation, and compromises user experience.

It may be understood that the foregoing is briefly illustrated only by using an example in which the wearable device is smart glasses. However, in practice, another type of wearable devices (such as a smart band or a smart watch) also has a same or similar technical defect.

Therefore, an embodiment of this application provides a wearable device that is conducive to implementing a light and thin design and can effectively improve user experience.

To make objectives, technical solutions, and advantages of this application clearer, the following further describes this application in detail with reference to the accompanying drawings and specific embodiments.

Terms used in the following embodiments are only intended to describe specific embodiments, but are not intended to limit this application. Terms "one", "a", and "the" of singular forms used in this specification and the appended claims of this application are also intended to include a form like "one or more", unless otherwise specified in the context clearly. It should be further understood that, in the following embodiments of this application, "at least one" means one, two, or more.

Reference to "an embodiment" or the like described in this specification means that one or more embodiments of this application include a specific feature, structure, or characteristic described with reference to embodiments. Therefore, statements such as "in an embodiment", "in some implementations", and "in other implementations" that appear at different places in this specification do not necessarily mean reference to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner.

For ease of understanding the technical solutions of this application, the following uses an example in which the wearable device is smart glasses for specific description.

As shown in FIG. 2, in an embodiment provided in this application, the smart glasses include a rim 10, a temple 20a, and a temple 20b. A lens 11 and a lens 12 each are secured in the rim 10. One end of the temple 20a is connected to the rim 10, and the other end has a powered part 200a. One end of the temple 20b is connected to the rim 10, and the other end has a powered part 200b.

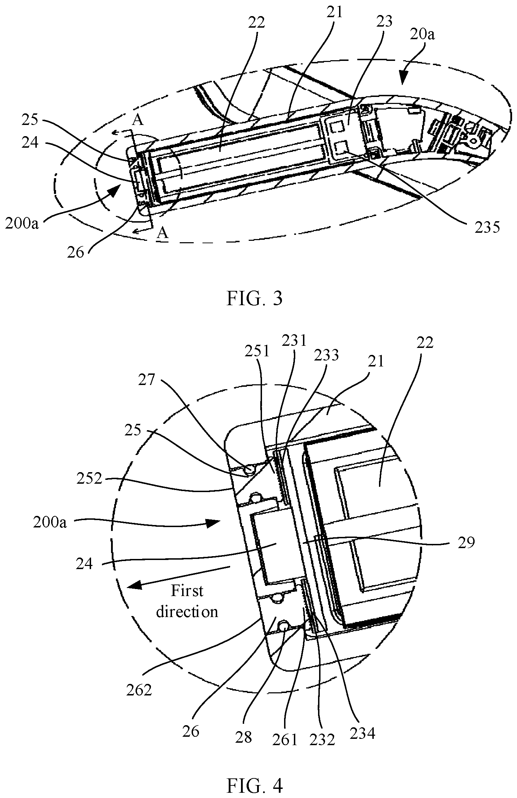

The temple 20a is used as an example, as shown in FIG. 2 and FIG. 3. The temple 20a includes a first housing 21, a battery 22, a first circuit board assembly 23, and a first magnet 24. The first housing 21 has an accommodating cavity (not marked in the figure). The battery 22, the first circuit board assembly 23, and the first magnet 24 are fixedly disposed in the accommodating cavity. A first conductive terminal 25, a second conductive terminal 26, and the first magnet 24 form the powered part 200a.

Refer to FIG. 3 and FIG. 4. The first conductive terminal 25 has a first connection end 251 and a first docking end 252. The first connection end 251 is electrically connected to the first circuit board assembly 23, and the first docking end 252 protrudes from the first housing 21 and is configured to electrically connect to a charging device. The second conductive terminal 26 has a second connection end 261 and a second docking end 262. The second connection end 261 is electrically connected to the first circuit board assembly 23, and the second docking end 262 protrudes from the first housing 21 and is configured to electrically connect to the charging device. The first magnet 24 is disposed between the first conductive terminal 25 and the second conductive terminal 26, and is configured to attract a magnet in the charging device.

In practice, after the first magnet 24 attracts the magnet of the charging device, the first docking end 252 and the second docking end 262 are electrically connected to corresponding conductive terminals of the charging device respectively, so that electric energy of the charging device can be transferred to the battery 22 for storage through the first conductive terminal 25 and the second conductive terminal 26.

In this embodiment provided in this application, two conductive terminals (that is, the first conductive terminal 25 and the second conductive terminal 26) may be electrically connected to the charging device, and transmit electric energy to the battery 22, so that a quantity of used conductive terminals and space occupation can be reduced. Alternatively, it may be understood that, in conventional smart glasses, a micro-USB interface is usually provided to implement a function like charging. The micro-USB interface generally includes four conductive terminals. Therefore, if the micro-USB interface is provided in the smart glasses to implement a function like charging, relatively large space is occupied. Therefore, this is not conducive to a light and thin design of the smart glasses. In addition, during charging, an interface in the smart glasses needs to accurately dock with a connector of the charging device, which is inconvenient for a user to perform operations. However, in this embodiment provided in this application, the smart glasses and the charging device are connected through magnetic attraction, thereby facilitating an operation of the user during charging. Alternatively, it may be understood that precise docking between conductive terminals can be implemented through attraction between a magnet in the smart glasses and a magnet in the charging device. In addition, plugging and unplugging actions are also avoided. Therefore, it is more convenient for user operation during charging or after charging is completed, thereby helping improve use experience of the user. In addition, after the first magnet 24 is disposed between the first conductive terminal 25 and the second conductive terminal 26, space between the first conductive terminal 25 and the second conductive terminal 26 can be fully used, thereby avoiding a waste of space. Therefore, this is conducive to a light and thin design of the smart glasses. Alternatively, it may be understood that, in specific application, to avoid an adverse impact like electromagnetic interference between the first conductive terminal 25 and the second conductive terminal 26, specific spacing is kept between the first conductive terminal 25 and the second conductive terminal 26. After the first magnet 24 is disposed between the first conductive terminal 25 and the second conductive terminal 26, space between the first conductive terminal 25 and the second conductive terminal 26 can be effectively used, thereby avoiding a waste of space, and facilitating implementation of a light and thin design of the smart glasses or the temple 20a.

In specific application, types and relative position relationships of the first conductive terminal 25 and the second conductive terminal 26 can be diverse.

For example, as shown in FIG. 4, in an embodiment provided in this application, both the first conductive terminal 25 and the second conductive terminal 26 are pin needles (pin needles). One end (a right end in the figure) of the first conductive terminal 25 is the first connection end 251, and the other end (a left end in the figure) is the first docking end 252. One end (a right end in the figure) of the second conductive terminal 26 is the second connection end 261, and the other end (a left end in the figure) is the second docking end 262. The first conductive terminal 25 and the second conductive terminal 26 are disposed in parallel, and the first docking end 252 and the second docking end 262 face toward a same direction, to facilitate docking with corresponding conductive terminals in the charging device.

In addition, the first docking end 252 may be kept flush with a surface of the first housing 21, and the second docking end 262 may be kept flush with the surface of the first housing 21, to ensure safety of the first conductive terminal 25 and the second conductive terminal 26, and effectively prevent the first conductive terminal 25 and the second conductive terminal 26 from being scratched by a foreign matter.

In specific application, to prevent impurities such as dust and water vapor from entering the first housing 21, a first sealing ring 27 may be further disposed between the first conductive terminal 25 and the first housing 21, and a second sealing ring 28 may be further disposed between the second conductive terminal 26 and the first housing 21. Specifically, the first conductive terminal 25 has a ring-shaped groove (not marked in the figure), and the first sealing ring 27 is sleeved in the groove and closely abuts against the first housing 21. Correspondingly, the second conductive terminal 26 has a ring-shaped groove (not marked in the figure), and the second sealing ring 28 is sleeved in the groove and closely abuts against the first housing 21. In this way, impurities such as dust and water vapor can be prevented from entering the accommodating cavity through a gap between the first conductive terminal 25 and the first housing 21 and a gap between the second conductive terminal 26 and the first housing 21, thereby improving dustproof and waterproof performance of the smart glasses.

It may be understood that, in another implementation, the first conductive terminal 25 and the second conductive terminal 26 may alternatively use other types of electric conductors. Types of the first conductive terminal 25 and the second conductive terminal 26 are not limited in this application.

In addition, in specific application, the first magnet 24 may be of various types and disposed at various positions.

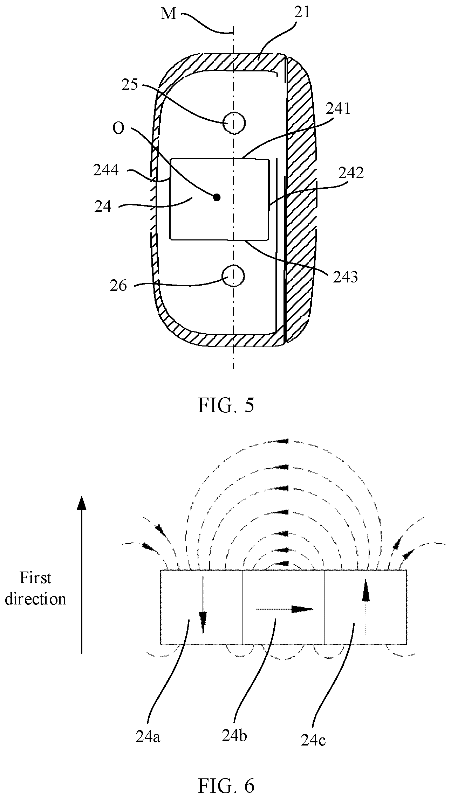

For example, as shown in FIG. 5, in an embodiment provided in this application, the first magnet 24 is a rectangular block-shaped permanent magnet. The first magnet 24 has a first side 241, a second side 242, a third side 243, and a fourth side 244 that are sequentially connected. The first side 241 faces toward the first conductive terminal 25, and the third side 243 faces toward the second conductive terminal 26.

In specific disposition, a distance between the first side 241 and the first conductive terminal 25 may be the same as or approximately the same as a distance between the third side 243 and the second conductive terminal 26. Specifically, an axis of the first conductive terminal 25 is parallel to the first side 241. Therefore, the distance between the first side 241 and the first conductive terminal 25 is a distance of the first conductive terminal 25 projected on a plane on which the first side 241 is located. Correspondingly, the distance between the third side 243 and the second conductive terminal 26 is a distance of the second conductive terminal 26 projected on a plane on which the third side 243 is located. Alternatively, it may be understood that the first magnet 24 is located at a middle position between the first conductive terminal 25 and the second conductive terminal 26.

It may be understood that, in another implementation, the distance between the first side 241 and the first conductive terminal 25 may be different from the distance between the third side 243 and the second conductive terminal 26. This is not limited in this application.

In addition, a distance between the second side 242 and a plane on which the first conductive terminal 25 and the second conductive terminal 26 are located may be the same as or different from a distance between the fourth side 244 and the plane on which the first conductive terminal 25 and the second conductive terminal 26 are located.

For example, in this embodiment provided in this application, the distance between the second side 242 and the plane on which the first conductive terminal 25 and the second conductive terminal 26 are located is different from the distance between the fourth side 244 and the plane on which the first conductive terminal 25 and the second conductive terminal 26 are located. Specifically, the first conductive terminal 25 and the second conductive terminal 26 are disposed in parallel. Therefore, the axis of the first conductive terminal 25 and an axis of the second conductive terminal 26 are located in a same plane M, and the plane M is the plane on which the first conductive terminal 25 and the second conductive terminal 26 are located. The second side 242 is parallel to the plane M. Therefore, a distance between the second side 242 and the plane M is the distance between the second side 242 and the plane on which the first conductive terminal 25 and the second conductive terminal 26 are located. Correspondingly, the fourth side 244 is parallel to the plane M. Therefore, a distance between the fourth side 244 and the plane M is the distance between the fourth side 244 and the plane on which the first conductive terminal 25 and the second conductive terminal 26 are located. It can be clearly seen from the figure that the distance between the second side 242 and the plane on which the first conductive terminal 25 and the second conductive terminal 26 are located is different from the distance between the fourth side 244 and the planes on which the first conductive terminal 25 and the second conductive terminal 26 are located. Alternatively, it may be understood that, between the first conductive terminal 25 and the second conductive terminal 26, the first magnet 24 is disposed in an eccentric manner. That is, a virtual center O of the first magnet 24 is not located in the plane M on which the first conductive terminal 25 and the second conductive terminal 26 are located.

In the eccentric disposing manner, a volume of the first magnet 24 may be increased as much as possible in limited space, thereby improving magnetic attraction force of the first magnet 24.

For example, in this embodiment provided in this application, considering a structural design or space limitation of the first housing 21, space of the first conductive terminal 25 and the second conductive terminal 26 close to a right half part of the first housing 21 is relatively small. Therefore, to maximize the volume of the first magnet 24, a volume of the first magnet 24 on a left side of the plane M may be greater than a volume of the first magnet 24 on a right side of the plane M, so that space occupation of the first magnet 24 can be optimized, and the first magnet 24 can also have greater magnetic attraction force.

Certainly, in another implementation, a shape contour of the first magnet 24 may also be a square, a circular sheet, or another shape. A shape and a type of the first magnet 24 are not specifically limited in this application.

In addition, in some implementations, the first magnet 24 may alternatively include a plurality of magnet units, and the plurality of magnet units may be arranged in a Halbach array, so that the first magnet 24 has greater magnetic attraction force.

For example, as shown in FIG. 6, in this embodiment provided in this application, the first magnet has three magnet units: a magnet unit 24a, a magnet unit 24b, and a magnet unit 24c. A straight line arrow in each magnet unit shown in the figure represents a direction of a magnetic pole corresponding to the magnet unit. After the three magnet units are arranged based on directions of magnetic poles in the figure, greater magnetic attraction force may be provided in a first direction. It may be understood that, with reference to FIG. 4, in specific application, the first direction may be consistent with a docking direction of the powered part 200a and the charging device, so that when the powered part 200a docks with the charging device, great magnetic attraction force can be generated between the first magnet 24 and the magnet of the charging device, thereby improving stability during charging.

Certainly, in another implementation, magnetic attraction force of the first magnet 24 may also be improved by using another structure.

For example, as shown in FIG. 4, in another embodiment provided in this application, the smart glasses further include a soft magnet 29. The soft magnet 29 is located in a direction of the first magnet 24 facing toward the accommodating cavity. That is, the soft magnet 29 can effectively improve magnetic attraction force of the first magnet 24 in the first direction.

In specific application, the soft magnet 29 may also have various structure types. For example, in this embodiment provided in this application, the soft magnet 29 is a rectangular sheet, so that space occupation of the soft magnet 29 can be effectively reduced, and magnetic attraction force of the first magnet 24 in a second direction can also be effectively improved.

It may be understood that, in another implementation, the soft magnet 29 may also be a circular sheet, an elliptic sheet, or another shape. A shape of the soft magnet 29 is not specifically limited in this application.

In addition, the soft magnet 29 may alternatively be disposed to secure the first conductive terminal 25 and the second conductive terminal 26, to improve force-bearing strength of the first conductive terminal 25 and the second conductive terminal 26.

For example, as shown in FIG. 4, in this embodiment provided in this application, the first circuit board assembly (not shown in the figure) includes a flexible circuit board. The flexible circuit board has a first conductive sheet 231 and a second conductive sheet 232. The first conductive sheet 231 is connected to the first connection end 251 of the first conductive terminal 25, and the second conductive sheet 232 is connected to the second connection end 261 of the second conductive terminal 26. Because the flexible circuit board is easily bent when being subjected to external force, the first conductive sheet 231 and the second conductive sheet 232 may be secured to the soft magnet 29. In addition, the soft magnet 29 may be secured inside the first housing 21 by using a binder.

When the first conductive terminal 25 and the second conductive terminal 26 are subjected to external force (for example, when the first conductive terminal 25 and the second conductive terminal 26 dock with conductive terminals of the charging device), acting force may be transferred to the soft magnet 29 through the first conductive sheet 231 and the second conductive sheet 232. Because the soft magnet 29 is secured inside the first housing 21, displacement of the first conductive terminal 25 and the second conductive terminal 26 can be prevented, thereby ensuring stability of the first conductive terminal 25 and the second conductive terminal 26.

In addition, in specific application, a first reinforcing plate 233 may be further disposed on a side that is of the first conductive sheet 231 and that is away from the first connection end 251, and a second reinforcing plate 234 may be further disposed on a side that is of the second conductive sheet 232 and that is away from the second connection end 261. The first reinforcing plate 233 can effectively improve force-bearing strength of the first conductive sheet 231, and prevent the first conductive sheet 231 from being deformed when being subj ected to external force. Correspondingly, the second reinforcing plate 234 can effectively improve force-bearing strength of the second conductive sheet 232, and prevent the first conductive sheet 231 from being deformed when being subjected to external force.

During specific implementation, both the first reinforcing plate 233 and the second reinforcing plate 234 may be secured to the soft magnet 29, so that force-bearing strength of the first conductive sheet 231 and the second conductive sheet 232 can be effectively improved, to prevent an adverse situation like deformation and displacement.

Certainly, in another implementation, the first reinforcing plate 233 may alternatively be directly and fixedly connected to the first housing 21, and the second reinforcing plate 234 may alternatively be directly and fixedly connected to the first housing 21. Alternatively, the first reinforcing plate 233 and the second reinforcing plate 234 may be omitted.

It may be understood that, in this embodiment provided in this application, because the flexible circuit board has features such as relatively small space occupation and easy bending, the flexible circuit board is used in the first circuit board assembly 23 to implement an electrical connection between the first conductive terminal 25, the second conductive terminal 26, the battery 22, and another electronic component, to facilitate a light and thin design of the temple 20a. It may be understood that, in another implementation, the first circuit board assembly 23 may also include a printed circuit board, or include both a flexible circuit board and a printed circuit board. This is not limited in this application.

In addition, in practice, static electricity may exist inside the smart glasses. An objective is to prevent static electricity from causing an adverse impact on some electronic components in the smart glasses.

As shown in FIG. 3, in this embodiment provided in this application, the first circuit board assembly 23 further includes an electrostatic protection component 235. Specifically, the electrostatic protection component 235 is electrically connected to the flexible circuit board, and is disposed on a side that is of the battery 22 and that is away from the powered part 200a. Alternatively, it may be understood that the battery 22 is located between the electrostatic protection component 235 and the powered part 200a. After the electrostatic protection component 235 is disposed on the side that is of the battery 22 and that is away from the powered part 200, the electrostatic protection component 235 can be prevented from occupying space of the powered part 200a. In specific application, the electrostatic protection component 235 may be a transient voltage suppression diode (transient voltage suppression diode), or may be another type of component that can provide protection against static electricity. A type of the electrostatic protection component 235 is not limited in this application.

It may be understood that in the foregoing embodiment, the temple 20a is used as an example for specific description. In specific application, the temple 20a and the temple 20b may be of a roughly same and symmetric structure. Details are not described herein.

In addition, to facilitate charging of the smart glasses, an embodiment of this application further provides a charging device.

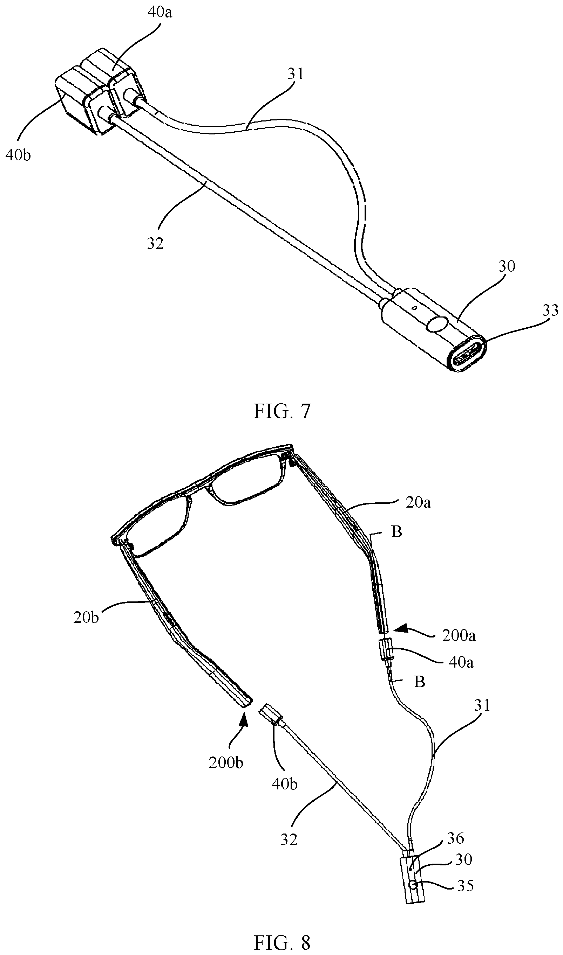

As shown in FIG. 7, in an embodiment provided in this application, the charging device includes a female socket 30, a charging head 40a, and a charging head 40b. The female socket 30 is electrically connected to the charging head 40a through a cable 31, and the female socket 30 is electrically connected to the charging head 40b through a cable 32. In addition, the female socket 30 has a power interface 33 configured to electrically connect to a power supply. In specific application, the power interface 33 may be USB Type-C, Lightning, or a like type. A type of the power interface 33 is not limited in this application.

As shown in FIG. 8, the charging head 40a may dock with a powered part 200a or a powered part 200b, so that electric energy in the charging device can be transmitted to a battery (not shown in the figure) in a temple 20a or a temple 20b. The charging head 40b may dock with the powered part 200a or the powered part 200b, so that electric energy in the charging device can be transmitted to the battery (not shown in the figure) in the temple 20a or the temple 20b. Alternatively, it may be understood that the charging head 40a may dock with either powered part, and the charging head 40b may also dock with either powered part. When performing a charging operation, a user does not need to distinguish between powered parts (for example, the charging head 40a needs to dock with the powered part 200a, and the charging head 40b needs dock with the powered part 200b), so that operation convenience of the user during charging can be effectively improved.

In addition, in this embodiment provided in this application, forward and reverse insertion charging can be further implemented.

Specifically, the charging head 40a is used as an example. The charging head 40a has two conductive terminals: a third conductive terminal 42 and a fourth conductive terminal 43. After the charging head 40a docks with the powered part 200a, a first conductive terminal 25 may dock with the third conductive terminal 42, and the second conductive terminal 26 may dock with the fourth conductive terminal 43. Alternatively, the first conductive terminal 25 may dock with the fourth conductive terminal 43, and the second conductive terminal 26 may dock with the third conductive terminal 42. In this way, forward and reverse insertion charging is implemented.

In specific application, the charging head 40a may have various structures.

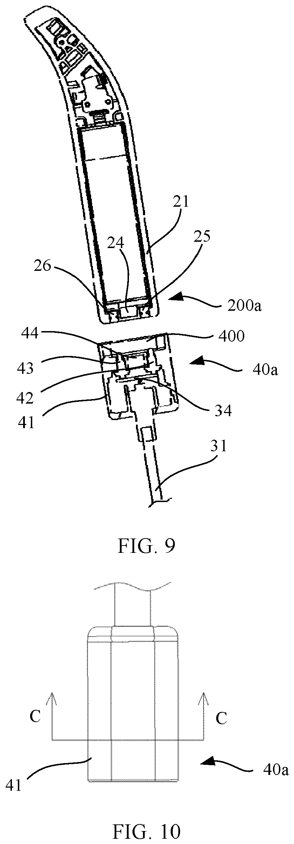

For example, as shown in FIG. 9, in an embodiment provided in this application, the charging head 40a includes a second housing 41, a third conductive terminal 42, a fourth conductive terminal 43, and a second magnet 44. The second housing 41 has an accommodating cavity (not shown in the figure), the third conductive terminal 42 has a third docking end (an upper end in the figure) and a third connection end (a lower end in the figure), the third docking end protrudes from the second housing 41, and the third connection end is connected to the cable 31 through a circuit board 34. The fourth conductive terminal 43 has a fourth docking end (an upper end in the figure) and a fourth connection end (a lower end in the figure), the fourth docking end protrudes from the second housing 41, and the fourth connection end is connected to the cable 31 through the circuit board 34. The second magnet 44 is disposed between the third conductive terminal 42 and the fourth conductive terminal 43, and is configured to attract a first magnet 24 of the powered part 200a.

During charging, after the charging head 40a docks with the powered part 200a, the first magnet 24 and the second magnet 44 attract each other, the first conductive terminal 25 is connected to the third conductive terminal 42, and the second conductive terminal 26 is connected to the fourth conductive terminal 43. In this way, a connection between the charging head 40a and the powered part 200a is implemented.

In specific application, types and relative position relationships of the third conductive terminal 42 and the fourth conductive terminal 43 can be diverse.

For example, in an embodiment provided in this application, both the third conductive terminal 42 and the fourth conductive terminal 43 are pogo pins (pogo pins). One end (a lower end in the figure) of the third conductive terminal 42 is the third connection end, and the other end (an upper end in the figure) is the third docking end. One end (a lower end in the figure) of the fourth conductive terminal 43 is the fourth connection end, and the other end (an upper end in the figure) is the fourth docking end. The third conductive terminal 42 and the fourth conductive terminal 43 are disposed in parallel, and the third docking end and the fourth docking end face toward a same direction, to facilitate docking with corresponding conductive terminals (for example, the first conductive terminal 25 and the second conductive terminal 26) in the powered device.

In addition, after the pogo pins are used for both the third conductive terminal 42 and the fourth conductive terminal 43, connection effect between the charging head 40a and the powered part 200a can be effectively improved. Specifically, after the charging head 40a docks with the powered part 200a, the first magnet 24 and the second magnet 44 attract each other. In addition, both the third conductive terminal 42 and the fourth conductive terminal 43 have relatively good elasticity. Therefore, the first conductive terminal 25 can elastically abut against the third conductive terminal 42, and the second conductive terminal 26 can elastically abut against the fourth conductive terminal 43, thereby ensuring reliability of a connection between the charging head 40a and the powered part 200a.

It may be understood that, in another implementation, the third conductive terminal 42 and the fourth conductive terminal 43 may alternatively use other types of electric conductors. This is not limited in this application.

In addition, to improve airtightness after the charging head 40a docks with the powered part 200a, in an embodiment provided in this application, the charging head 40a further has a flange 400, and both the third docking end and the fourth docking end are located in a contour enclosed by the flange 400. After the charging head 40a docks with the powered part 200a, the flange 400 can be sleeved on a periphery of a first housing 21 of the powered part 200a, thereby effectively preventing impurities such as dust and water vapor from entering. In some implementations, a surface that is of the flange 400 and that is in contact with the first housing 21 may be sprayed with rubber paint, or another flexible material may be disposed, to reduce abrasion between the flange 400 and the first housing 21.

In specific application, a height of the flange 400 may be properly set based on an actual situation. For example, in this embodiment provided in this application, the height of the flange 400 is higher than a length of the third conductive terminal 42 and the fourth conductive terminal 43 protruding from the second housing 41. In practice, the flange 400 can play a good role in blocking a foreign matter, to prevent the third conductive terminal 42 and the fourth conductive terminal 43 from being scratched by the foreign matter. In addition, when the foreign matter is a material with relatively good conductivity such as metal, an adverse situation like a short circuit between the third conductive terminal 42 and the fourth conductive terminal 43 can be further prevented.

It may be understood that, in another implementation, the flange 400 may alternatively be disposed in the powered part 200a, or may be disposed in both the powered part 200a and the charging head 40a. This is not limited in this application.

In addition, in specific application, the second magnet 44 may be of various types and disposed at various positions.

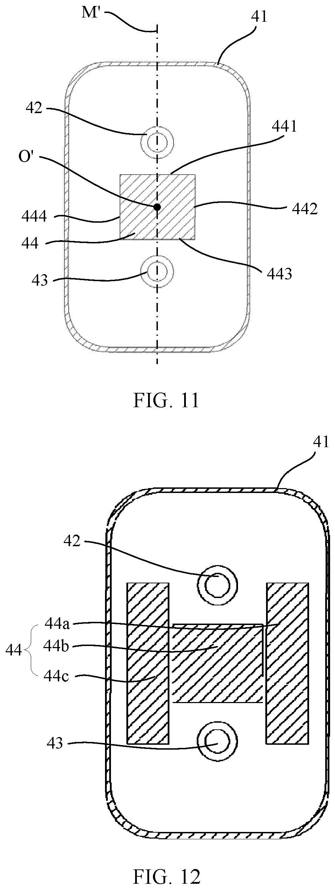

For example, as shown in FIG. 10 and FIG. 11, in an embodiment provided in this application, the second magnet 44 is a rectangular block-shaped permanent magnet. The second magnet 44 has a first side 441, a second side 442, a third side 443, and a fourth side 444 that are sequentially connected. The first side 441 faces toward the third conductive terminal 42, and the third side 443 faces toward the fourth conductive terminal 43.

In specific disposition, a distance between the first side 441 and the third conductive terminal 42 may be the same as or approximately the same as a distance between the third side 443 and the fourth conductive terminal 43. Specifically, an axis of the third conductive terminal 42 is parallel to the first side 441. Therefore, the distance between the first side 441 and the third conductive terminal 42 is a distance of the third conductive terminal 42 projected on a plane on which the first side 441 is located. Correspondingly, the distance between the third side 443 and the fourth conductive terminal 43 is a distance of the fourth conductive terminal 43 projected on a plane on which the third side 443 is located. Alternatively, it may be understood that the second magnet 44 is located at a middle position between the third conductive terminal 42 and the fourth conductive terminal 43.

It may be understood that, in another implementation, the distance between the first side 441 and the third conductive terminal 42 may be different from the distance between the third side 443 and the fourth conductive terminal 43. This is not limited in this application.

In addition, a distance between the second side 442 and a plane on which the third conductive terminal 42 and the fourth conductive terminal 43 are located may be the same as or different from a distance between the fourth side 444 and a plane on which the third conductive terminal 42 and the fourth conductive terminal 43 are located.

For example, in this embodiment provided in this application, the distance between the second side 442 and the plane on which the third conductive terminal 42 and the fourth conductive terminal 43 are located is the same as the distance between the fourth side 444 and the plane on which the third conductive terminal 42 and the fourth conductive terminal 43 are located. Specifically, the third conductive terminal 42 and the fourth conductive terminal 43 are disposed in parallel. Therefore, the axis of the third conductive terminal 42 and an axis of the fourth conductive terminal 43 are located in a same plane M', and the plane M' is the plane on which the third conductive terminal 42 and the fourth conductive terminal 43 are located. The second side is parallel to the plane M'. Therefore, a distance between the second side 442 and the plane M' is the distance between the second side 442 and the plane on which the third conductive terminal 42 and the fourth conductive terminal 43 are located. Correspondingly, the fourth side 444 is parallel to the plane M'. Therefore, a distance between the fourth side 444 and the plane M' is the distance between the fourth side 444 and the plane on which the third conductive terminal 42 and the fourth conductive terminal 43 are located. Alternatively, it may be understood that, between the third conductive terminal 42 and the fourth conductive terminal 43, a virtual center O' of the second magnet 44 is located in the plane M' on which the third conductive terminal 42 and the fourth conductive terminal 43 are located. Alternatively, it may be understood that the second magnet 44 is disposed at a central position between the third conductive terminal 42 and the fourth conductive terminal 43.

As shown in FIG. 9, in specific application, when the first magnet 24 is disposed between the first conductive terminal 25 and the second conductive terminal 26 in an eccentric manner, and the second magnet 44 is disposed at a central position between the third conductive terminal 42 and the fourth conductive terminal 43, to ensure that the first conductive terminal 25 accurately docks with the third conductive terminal 42 and the second conductive terminal 26 accurately docks with the fourth conductive terminal 43, or the first conductive terminal 25 accurately docks with the fourth conductive terminal 43 and the second conductive terminal 26 accurately docks with the third conductive terminal 42, while the first magnet 24 and the second magnet 44 can attract each other, in a direction perpendicular to a docking direction of the powered part 220a and the charging head 40a, a cross-sectional area of the second magnet 44 is greater than a cross-sectional area of the first magnet 24, and a projection of the first magnet 24 falls within the second magnet 44.

Specifically, after the powered part 200a docks with the charging head 40a, when the first conductive terminal 25 accurately docks with the third conductive terminal 42, and the second conductive terminal 26 accurately docks with the fourth conductive terminal 43, the projection of the first magnet 24 falls within the second magnet 44, to ensure that the first magnet 24 and the second magnet 44 can well attract each other.

After the charging head 40a rotates 180° and docks with the powered part 200a, when the first conductive terminal 25 accurately docks with the fourth conductive terminal 43, and the second conductive terminal 26 accurately docks with the third conductive terminal 42, the projection of the first magnet 24 falls within the second magnet 44, to ensure that the first magnet 24 and the second magnet 44 can well attract each other.

Certainly, in another implementation, a shape contour of the second magnet 44 may also be a square, a circular sheet, or another shape. In addition, shapes of the first magnet 24 and the second magnet 44 may be the same or may be different. This is not limited in this application.

In addition, in some implementations, the second magnet 44 may alternatively include a plurality of magnet units, and the plurality of magnet units may be arranged in a Halbach array, so that the second magnet 44 has greater magnetic attraction force.

For example, as shown in FIG. 12, in this embodiment provided in this application, the second magnet 44 has three magnet units: a magnet unit 44a, a magnet unit 44b, and a magnet unit 44c. In this way, when the charging head 40a docks with the powered part, great magnetic attraction force can be generated between the second magnet 44 and the first magnet 24, thereby improving stability during charging.

It may be understood that, in another implementation, magnetic attraction force of the second magnet 44 may also be improved in another manner. For example, a second magnet 44 with a relatively large volume may be used, or a soft magnet may be disposed on a side that is of the second magnet 44 and that is away from the first magnet 24. Details are not described herein.

In specific application, lengths of the cable 31 and the cable 32 may be the same or different.

For example, as shown in FIG. 8, in this embodiment provided in this application, a length of the cable 31 is slightly greater than a length of the cable 32, to improve convenience of wearing and using by the user. Specifically, when the smart glasses need to be charged and are not easy to remove, the user may wind the cable 31 around the back of the neck, to improve convenience of wearing the charging device, which can implement the effect of charging while wearing and using the smart glasses.

In addition, in specific application, a communication connection may be further performed between the charging device and the smart glasses.

For example, after the conductive terminals (for example, the third conductive terminal 42 and the fourth conductive terminal 43) in the charging head 40a dock with the conductive terminals (for example, the first conductive terminal 25 and the second conductive terminal 26) in the powered part 200a, an electrical signal may also be transmitted between the charging device and the smart glasses, to implement an operation like pairing or resetting of the smart glasses.

Certainly, for ease of operation, a button 35 may be disposed on the female socket 30, and the user may implement an operation like pairing or resetting of the smart glasses and the charging device by pressing (for example, long-pressing or tapping) the button 35.

It may be understood that, in another implementation, both the smart glasses and the charging device may be equipped with a Bluetooth module, a Wi-Fi module, or the like to implement wireless communication. A type of a communication module provided in the smart glasses and the charging device and a communication manner between the smart glasses and the charging device are not limited in this application.

In addition, to present a connection status between the charging device and the smart glasses to the user, an indicator 36 may be further provided in the charging device. For example, when the charging device charges the smart glasses, the indicator 36 may be red. After the smart glasses are fully charged, the indicator 36 may be in an off state. Alternatively, when an operation like pairing or resetting is performed between the smart glasses and the charging device, the indicator 36 may be green or in a blinking state. It may be understood that, in practice, a display status of the indicator 36 may be properly set based on an actual requirement. This is not limited in this application.

It may be understood that, in another implementation, the button 35 or the indicator 36 may also be disposed in the charging head 40a or the charging head 40b, or may be disposed in the charging head 40a, the charging head 40b, and the female socket 30. This is not limited in this application.

Certainly, during specific implementation, the charging device may further include a second circuit board assembly (not shown in the figure). The second circuit board assembly is disposed in the female socket 30, the power interface 33 is electrically connected to the circuit board assembly, the charging head 40a is electrically connected to the circuit board assembly through the cable 31, and the charging head 40b is electrically connected to the circuit board assembly through the cable 32.

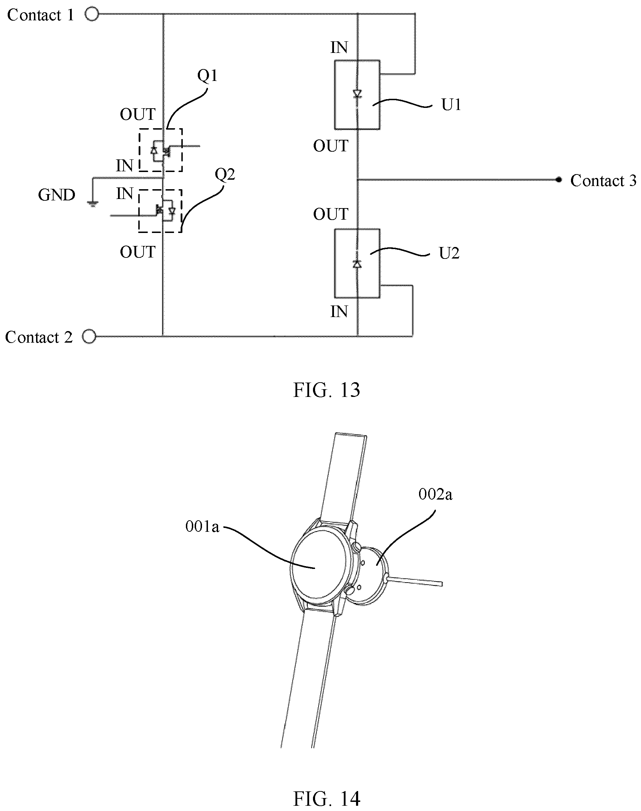

In addition, to implement forward and reverse insertion effect, a charging circuit may be further provided in the smart glasses. Specifically, FIG. 13 is a diagram of a partial circuit of the charging circuit. A contact 1 and a contact 2 respectively represent the two conductive terminals (for example, the first conductive terminal and the second conductive terminal) in the powered part. A contact 3 and GND are configured to connect to a control IC circuit in the smart glasses. Q1, Q2, U1, and U2 each are a switch having a reverse cut-off function. That is, in each switch, a current can only be transmitted from an IN terminal to an OUT terminal. When the contact 1 is connected to a high level, and the contact 2 is connected to a low level, a flow path of a current is: the contact 1-the switch U1-the contact 3. When the current flows from the contact 3 to the control IC circuit, the battery may be charged, and the current finally flows to the contact 2 through GND and the switch Q2, thereby forming a closed loop.

When the contact 1 is connected to a low level, and the contact 2 is connected to a high level, a flow path of a current is: the contact 2-the switch U2-the contact 3. When the current flows from the contact 3 to the control IC circuit, the battery may be charged, and the current finally flows to the contact 1 through GND and the switch Q1, thereby forming a closed loop.

In specific application, the switches Q1 and Q2 may be MOS switching circuits (MOS switching circuits), and the switches U1 and U2 may be load switches (load switches). It may be understood that types of the switches Q1, Q2, U1, and U2 are not limited in this application.

It may be understood that, in another implementation, effect of forward and reverse insertion charging may also be implemented by using another circuit design. This is not limited in this application.

It should be noted that in the foregoing embodiment, only an example in which a powered device is smart glasses is used for specific description. Certainly, in specific application, the smart glasses may be replaced with another type of wearable device like a smart band. In addition, in the powered device, one powered part may be disposed, or two or more powered parts may be disposed. A quantity of powered parts is not limited in this application. Correspondingly, in the charging device, one charging head may be disposed, or two or more charging heads may be disposed. A quantity of disposed charging heads is not limited in this application.

In addition, the foregoing powered part and charging head may also be applied to other types of electronic devices. Alternatively, it may be understood that the powered device may include at least one powered part, and the powered part includes a magnet and two conductive terminals. The charging device may include at least one charging head. The charging head includes a magnet and two conductive terminals. The charging head is fixed relative to the powered part through magnetic attraction between two magnets. In addition, forward and reverse insertion effect may be implemented between the charging head and the powered part.

For example, as shown in FIG. 14, in an embodiment provided in this application, the electronic device may include a smart watch 001a and a charging base 002a. A powered part is disposed on the back of the smart watch 001a, and the charging base 002a includes a charging head. After the smart watch 001a is placed on the charging base 002a, a magnet in the powered part and a magnet in the charging base 002a attract each other, and two conductive terminals in the powered part are respectively connected to two conductive terminals in the charging base 002a.

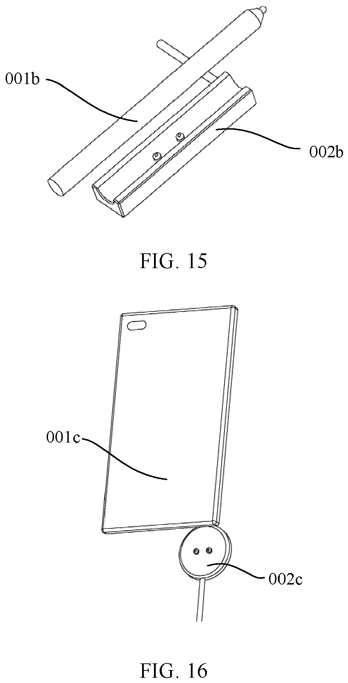

Alternatively, as shown in FIG. 15, the powered part may also be applied to a smart pen 001b. Correspondingly, the charging head may also be applied to a charging base 002b configured to charge the smart pen.

Alternatively, as shown in FIG. 16, the powered part may also be applied to a smartphone 001c. Correspondingly, the charging head may also be applied to a charging base 002c configured to charge the smartphone.

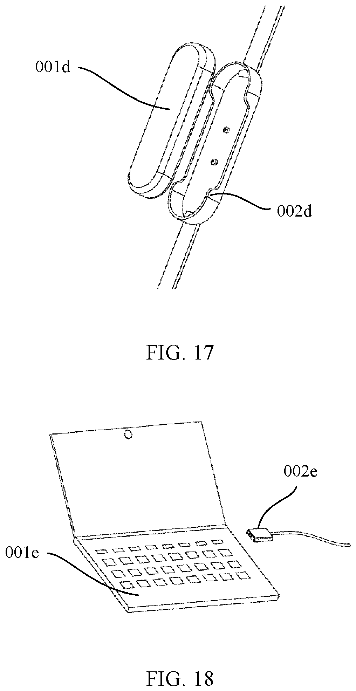

Alternatively, as shown in FIG. 17, the powered part may also be applied to a smart band 001d. Correspondingly, the charging head may also be applied to a charging base 002d configured to charge the smart band.

Alternatively, as shown in FIG. 18, the powered part may also be applied to a notebook computer 001e. Correspondingly, the charging head may also be applied to a charging head 002e configured to charge the notebook computer.

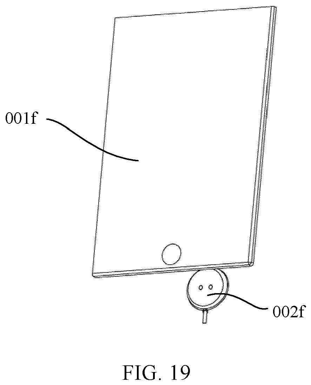

Alternatively, as shown in FIG. 19, the powered part may also be applied to a tablet computer 001f. Correspondingly, the charging head may also be applied to a charging base 002f configured to charge the tablet computer.

In summary, a type of an electronic device to which the powered part and the charging head are applied is not limited in this application.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wearable device, comprising:
a first housing (21), having an accommodating cavity;
a battery (22), disposed in the accommodating cavity; and
a first circuit board assembly (23), disposed in the accommodating cavity and electrically connected to the battery (22), wherein
the first housing (21) has at least one powered part, and the at least one powered part has a first conductive terminal (25) and a second conductive terminal (26);
the first conductive terminal (25) has a first connection end (251) and a first docking end (252), the first connection end (251) is electrically connected to the first circuit board assembly (23), and the first docking end (252) protrudes from the first housing (21);
the second conductive terminal (26) has a second connection end (261) and a second docking end (262), the second connection end (261) is electrically connected to the first circuit board assembly (23), and the second docking end (262) protrudes from the first housing (21); and
a first magnet (24) is disposed between the first conductive terminal (25) and the second conductive terminal (26).

2. The wearable device according to claim 1, wherein the first conductive terminal (25) and the second conductive terminal (26) are disposed in parallel, and the first docking end (252) and the second docking end (262) face toward a same direction.

3. The wearable device according to claim 2, wherein the first magnet (24) is a rectangular block, and the first magnet (24) has a first side (241), a second side (242), a third side (243), and a fourth side (244) that are sequentially connected, wherein
the first side (241) faces toward the first conductive terminal (25), and the third side (243) faces toward the second conductive terminal (26); and
a distance between the first side (241) and the first conductive terminal (25) is the same as a distance between the third side (243) and the second conductive terminal (26).

4. The wearable device according to claim 3, wherein an axis of the first conductive terminal (25) and an axis of the second conductive terminal (26) are located in a plane M, wherein
a distance between the second side (242) and the plane M is different from a distance between the fourth side (244) and the plane M.

5. The wearable device according to claim 4, wherein the first magnet (24) comprises a plurality of magnet units, and the plurality of magnet units are arranged in a Halbach array.

6. The wearable device according to claim 2, wherein the wearable device further comprises a soft magnet (29), and the soft magnet (29) is located on a side that is of the first magnet (24) and that faces toward the accommodating cavity.

7. The wearable device according to claim 6, wherein the first circuit board assembly (23) comprises a flexible circuit board, and the flexible circuit board has a first conductive sheet (231) and a second conductive sheet (232); and
the first conductive sheet (231) is connected to the first connection end (251), and the second conductive sheet (232) is connected to the second connection end (261).

8. The wearable device according to claim 7, wherein the first conductive sheet (231) has a first reinforcing plate (233), and the second conductive sheet (232) has a second reinforcing plate (234);
the first reinforcing plate (233) is disposed on a side that is of the first conductive sheet (231) and that is away from the first connection end (251); and
the second reinforcing plate (234) is disposed on a side that is of the second conductive sheet (232) and that is away from the second connection end (261).

9. The wearable device according to claim 8, wherein the first reinforcing plate (233) and the second reinforcing plate (234) are fixedly connected to the soft magnet (29).

10. The wearable device according to claim 7, wherein the first circuit board assembly (23) further comprises an electrostatic protection component (235); and
the electrostatic protection component (235) is electrically connected to the flexible circuit board, and the battery (22) is located between the electrostatic protection component (235) and the powered part.

11. The wearable device according to any one of claims 1 to 10, wherein the wearable device is smart glasses, and the smart glasses comprise a rim (10), a first temple (20a), and a second temple (20b);
one end of the first temple (20a) is connected to the rim (10), and the other end of the first temple (20a) has the powered part (200a); and
one end of the second temple (20b) is connected to the rim (10), and the other end of the second temple (20b) has the powered part (200b);

12. A charging device, comprising:
a power interface (33), configured to electrically connect to a power supply;
at least one charging head, configured to electrically connect to a powered device; and
a second circuit board assembly, electrically connected to the power interface (33) and the at least one charging head, wherein
the at least one charging head comprises:
a second housing (41);
a third conductive terminal (42), having a third connection end and a third docking end, wherein the third connection end is electrically connected to the second circuit board assembly, and the third docking end protrudes from the second housing (41);
a fourth conductive terminal (43), having a fourth connection end and a fourth docking end, wherein the fourth connection end is electrically connected to the second circuit board assembly, and the fourth docking end protrudes from the second housing (41); and
a second magnet (44), disposed between the third conductive terminal (42) and the fourth conductive terminal (43).

13. The charging device according to claim 12, wherein the third conductive terminal (42) and the fourth conductive terminal (43) are disposed in parallel, and the third docking end and the fourth docking end face toward a same direction.

14. The charging device according to claim 13, wherein the second magnet (44) is a rectangular block, and the second magnet has a first side (441), a second side (442), a third side (443), and a fourth side (444) that are sequentially connected, wherein
the first side (441) faces toward the third conductive terminal (42), and the third side (443) faces toward the fourth conductive terminal (43); and
a distance between the first side (441) and the third conductive terminal (42) is the same as a distance between the third side (443) and the fourth conductive terminal (43).

15. The charging device according to claim 14, wherein an axis of the third conductive terminal (42) and an axis of the fourth conductive terminal (43) are located in a plane M', wherein
a distance between the second side (442) and the plane M' is the same as a distance between the fourth side (444) and the plane M'.

16. The charging device according to any one of claims 12 to 15, wherein the charging device further comprises a female socket (30), and the power interface (33) is disposed on the female socket (30); and
the at least one charging head is electrically connected to the female socket (30) by using a cable.

17. The charging device according to claim 16, wherein the charging device comprises a plurality of charging heads, each of the charging heads is electrically connected to the female socket (30) by using the independent cable, and lengths of the at least two cables are different.

18. The charging device according to any one of claims 12 to 17, wherein an outer surface of the second housing (41) has a flange (400), and the third docking end and the fourth docking end are located in a contour enclosed by the flange (400).

19. An electronic device, comprising the wearable device according to any one of claims 1 to 11 and the charging device according to any one of claims 12 to 18, wherein
the first magnet (24) and the second magnet (44) attract each other, the third docking end is connected to the first docking end (252), and the fourth docking end is connected to the second docking end (262); or the third docking end is connected to the second docking end (262), and the fourth docking end is connected to the first docking end (252).

20. The electronic device according to claim 19, wherein there are a plurality of powered parts, and there are a plurality of charging heads; and
the powered part is configured to connect to any one of the charging heads.

21. The electronic device according to claim 19 or 20, wherein in a direction perpendicular to a docking direction of the powered part and the charging head, a cross-sectional area of the second magnet (44) is greater than or equal to a cross-sectional area of the first magnet (24).

22. The electronic device according to claim 21, wherein in the docking direction of the powered part and the charging head, a projection of the first magnet (24) falls within the second magnet (44).

23. The electronic device according to any one of claims 19 to 22, wherein the charging head has a flange (400), and after the charging head docks with the powered part, the flange (400) is sleeved on an outer surface of the first housing (21), and is closely attached to the first housing (21).
